Europäisches Patentamt

European Patent Office

Office européen des brevets

(19)

(11) Veröffentlichungsnummer: **0 415 151 A1**

# (12) EUROPÄISCHE PATENTANMELDUNG

(21) Anmeldenummer: 90115365.0

(22) Anmeldetag: **10.08.90**

(51) Int. Cl.5: **G01N 21/31**, G01N 21/62

(30) Priorität: **23.08.89 DE 3927768**

(43) Veröffentlichungstag der Anmeldung:
**06.03.91 Patentblatt 91/10**

(84) Benannte Vertragsstaaten:
**DE FR GB NL**

(71) Anmelder: **THE PERKIN-ELMER CORPORATION**
**761 Main Avenue**
**Norwalk Connecticut 06859-0181(US)**

(72) Erfinder: **van Veen, Eric H.**

**Zonnedauwtuin 8**
**NL-2317 MR Leiden(NL)**
Erfinder: **de Loos-Vollebregt, Margaretha T.C.**
**Nobellaan 55**
**NL-2641 XV Pijnacher(NL)**

(74) Vertreter: **Wolgast, Rudolf, Dipl.-Chem. Dr. et al**
**Dipl.-Phys. Jürgen Weisse Dipl.Chem. Dr.**
**Rudolf Wolgast Bökenbusch 41 Postfach 11 03 86**
**W-5620 Velbert 11 Langenberg(DE)**

(54) **Verfahren zur Konzentrationsbestimmung mittels optischer Emissions-Spektroskopie.**

(57) Ein Verfahren zur Konzentrationsbestimmung mittels optischer Emissions-Spektroskopie, enthält die Verfahrensschritte: (a) Erzeugen einer optischen Emission mit einer bekannten Konzentration eines gesuchten Elements, (b) Abtasten des dabei erhaltenen Emissionsspektrums mittels eines Spektralphotometers mit einer spektralen Spaltbreite in einem Wellenlängenbereich, der eine Spektrallinie des gesuchten Elements enthält, (c) Erzeugung einer optischen Emission mit einer unbekannten Probe, welche das gesuchte Element enthält, wobei die Konzentration des gesuchten Elements in der unbekannten Probe zu bestimmen ist, (d) Abtasten des dabei erhaltenen Emissionsspektrums mittels des Spektralphotometers mit der gleichen spektralen Spaltbreite und in dem gleichen Wellenlängenbereich, in welchem die Abtastung des Emissionsspektrums mit der bekannten Konzentration erfolgte, und (e) Verarbeitung des von dem Spektralphotometer wellenlängenabhängig gelieferten, das Spektrum wiedergebenden Signals mittels eines rekursiven Kalman- Filters zur Erzeugung eines Schätzwertes für die Konzentration des gesuchten Elementes.

Tabelle 1.

| Nachweisgrenzen ($\mu$g/L) | | | | | |
|---|---|---|---|---|---|
| Emissions-Spektrallinie (nm) | Matrix | $C_{L,Kalman}$ | $C_{L,true}$ | $C_{L,conv}$[a] | $C_{L,aq}$[a] |
| Nd II 401.225 | 100 mg/L Pr | 9.7 | 150 | 24 | 14 |
| P I 213.618 | 20 mg/L Cu | 240 | 630 | 290 | 320 |
| Cd II 226.502 | 600 mg/L Fe | 9.5 | 43 | 22 | 17 |
| In I 325.609 | 200 mg/L Mo 800 mg/L W | 46 | 360 | 170 | 110 |
| Mn II 257.610 | - | 1.2 | - | - | 2.2 |

Tabelle 2.

| Genauigkeit der Analysenergebnisse, die mit der Signalverarbeitung durch ein Kalman-Filter erreicht wird | | | | |
|---|---|---|---|---|
| | Analyt | | Matrix | |
| Vorbereitet | Kalman Filter | $sd_A$ | Vorbereitet | Kalman-Filter |
| | | Nd ($\mu$g/L) | | Pr (mg/L) |
| 29.7 | 27.8 | 5.0 | 99.1 | 97.3 |
| 60.7 | 54.2 | 4.9 | 99.9 | 98.9 |
| 102 | 98.2 | 6.3 | 100 | 99.1 |
| 199 | 193 | 3.4 | 99.5 | 98.5 |
| 403 | 392 | 4.6 | 100 | 100.4 |
| | | P ($\mu$g/L) | | Cu (mg/L) |
| 348 | 281 | 120 | 20.2 | 20.2 |
| 490 | 513 | 122 | 20.3 | 20.3 |
| 1030 | 1090 | 118 | 19.8 | 19.8 |
| | | In ($\mu$g/L) | | Mo/W (mg/L) |
| 198 | 165 | 19 | 200/798 | 195/786 |
| 421 | 359 | 25 | 199/797 | 194/787 |
| 627 | 548 | 25 | 199/795 | 192/784 |
| 821 | 694 | 22 | 199/793 | 193/785 |

Tabelle 3.

| Einfluß der Verschiebung der Peakpositionen bei dem gemessenen Spektrum und den Modellen auf die Genauigkeit der Schätzwerte für die Konzentrationen | | | | | | | |
|---|---|---|---|---|---|---|---|
| $\Delta\lambda$ [a] (pm) | $\delta\lambda$ [a] (pm) | Nd ($\mu$g/L) | abweichung (%) | P ($\mu$g/L) | abweichung (%) | Mn ($\mu$g/L) | abweichung (%) |
| 0 | 0 | 27.8 | - | 513 | - | 5.21 | - |
| 1 | - | 41.6 | 50 | | | 5.02 | 3.6 |
| -1 | - | 13.5 | 51 | | | 5.30 | 1.7 |
| 0.1 | - | | | 664 | 29 | | |
| -0.1 | | | | 363 | 29 | | |
| - | 1 | 27.0 | 2.9 | 561 | 9.4 | | |
| - | -1 | 27.6 | 0.7 | 497 | 3.1 | | |

EP 0 415 151 A1

## TECHNISCHES GEBIET

Die Erfindung betrifft ein Verfahren zur Konzentrationsbestimmung mittels optische Emissions-Spektroskopie.

## Zugrundeliegender Stand der Technik

Elemente im atomaren Zustand emittieren bei Anregung der Atome Linienspektren. Elemente im atomaren Zustand emittieren nach der Anregung Emissionsspektren in Form von Linienspektren. In Abhängigkeit von der Art der Anregung zum Beispiel bei Anregung im induktiv gekoppelten Plasma, werden bei vielen Elementen auch die Emissionsspektren von Ionen, d.h. ionisierten Atomen beobachtet. Der Einfachheit halber wird nachfolgend durchweg auf Atomspektren Bezug genommen werden, wobei dieser Ausdruck die Emissionsspektren sowohl von Atomen als auch von Ionen umfassen soll. Jedes Element liefert als Folge der Anregung ein für dieses Element charakteristisches Linienspektrum. In einem solchen Linienspektrum gibt es starke Spektrallinien, also Spektrallinien hoher Intensität, und weniger starke oder schwache Spektrallinien. Die Intensität des Spektrums hängt von der Anzahl der angeregten Atome und Ionen in der Lichtquelle ab. Die Spektrallinien sind sehr schmal und haben eine Breite von einigen Picometern.

Es ist bekannt eine zu analysierende Probenlösung in ein durch Hochfrequenz erhitztes Plasma einzuleiten und zur Konzentrationsbestimmung die Intensitäten bestimmter Spektrallinien zu messen, die für verschiedene gesuchte Elemente charakteristisch sind. Dabei wird ein von dem Plasma ausgehendes Lichtbündel durch einen Polychromator spektral zerlegt. Das Licht mit den verschiedenen Spektrallinien fällt auf Detektoren. Diese Detektoren liefern ein Signal, aus dem nach entsprechender Eichung die Konzentration des jeweiligen gesuchten Elements bestimmt werden kann.

Außer den Spektrallinien der verschiedenen Elemente tritt dabei eine unspezifische Untergrundemission auf. Diese Untergrundemission kann wellenlängenabhängig und u.U. strukturiert sein.

In einigen Fällen überlappen sich die Spektrallinien verschiedener Elemente. Es bietet dann Schwierigkeiten, die Konzentrationen aus solchen sich überlappenden Spektrallinien zu bestimmen.

In einem Aufsatz von S.D.Brown "The Kalman Filter in Analytical Chemistry" aus "Analytica Chimica Acta", 181 (1986) ,1-26 ist es bekannt, zur Trennung von sich überlappenden Signalen von Analysengeräten oder zur Driftkompensation Kalman Filter zu verwenden. Es wird dabei erwähnt, daß die Zustandsvariablen dabei auch von der Wellenlänge statt von der Zeit abhängig sein können. Es werden dort auch die in dem rekursiven, diskreten Kalman-Filter benutzten Algorithmen beschrieben. Dabei wird in jedem Rekursionsschritt ein Schätzwert für den Zustandsvektor bestimmt. Im darauffolgenden Rekursionsschritt wird ein Vektor von Meßgrößen (oder auch nur eine Meßgröße) gemessen. Es wird anhand einer Meßmatrix berechnet, welcher Vektor von Meßgrößen nach dem im vorhergehenden Rekursionsschritt bestimmten Schätzwert zu vorherzusagen ist. Der Schätzwert des Zustandsvektors wird korrigiert um die Differenz von Meßgrößen und vorhergesagten Meßgrößen multipliziert mit einer Filterverstärkung. Es wird in dieser Druckschrift auch auf die Möglichkeit hingewiesen, daß die Meßmatrix aus einigen Spaltenvektoren besteht, von denen jeder ein vollständiges sichtbares Spektrum als Folge von molaren Absorptionsvermögen darstellt. Diese Meßmatrix setzt dann die bei den verschiedenen Wellenlängen gemessenen Absorbance-Werte in Beziehung zu Zuständen des Filters, die als Konzentrationen der Bestandteile angegeben werden können. Das Filtermodell, das hierbei verwendet wird, sind experimentell erhaltene Signale des Analysengerätes. Ein Filter mit einem solchen empirischen Signalen kann zur bequemen Auflösung von sich überlappenden Spektren, hier Absorptionsspektren, dienen.

Ein Aufsatz von T.F.Brown und S.D.Brown "Resolution of Overlapped Electrochemical Peaks with the Use of the Kalman Filter" in "Analytical Chemistry" Bd. 53 (1981), 1410-1417 beschreibt die Trennung von sich überlappenden elektrochemischen Peaks mittels eines Kalman-Filters. Dort werden ebenfalls Kurven mit Standardlösungen verschiedener Elemente aufgenommen. Aus diesen Kurven wird ein Modell für ein Kalman-Filter gebildet. In dieser Veröffentlichung wird auch der Verlauf oder die Folge von Innovationen und die Verschiebung zwischen Probenspektren und Modellspektren nach einem Iterationsverfahren beschrieben.

Ein Aufsatz von G.H.Webster, T.L.Cecil und S.C.Rutan "Characterization of the Effect of Peak Shifts on the Performance of the Kalman Filter in Multicomponent Analysis" in "Journal of Chemometrics" Bd.3 (1988), 21-32 beschreibt Fluoreszenzanalyse. Bei der Fluoreszenzanalyse treten jedoch Probleme dadurch auf, daß die Fluorophoren empfindlich für die Polarität ihrer Umgebung sind. Dadurch kann eine spektrale

3

Verschiebung des Fluoreszenz-Emissionsspektrums um einige Nanometer erfolgen. In dieser Druckschrift ist auch eine Angabe über die Größe der Covarianzen P und die Varianz des Rauschens bei den Messungen ($S_x{}^2$) enthalten.

Auch bei dieser Druckschrift dient ein Kalman-Filter zur Trennung sich überlappender Spektren. Die Druckschrift befaßt sich mit dem Einfluß von Peakverschiebungen auf das Verhalten der Algorithmen einer Mehrkomponentenanalyse mit einem Kalman-Filter. Es wird gezeigt, daß der Verlauf der Differenz von tatsächlich gemessener Meßgröße und vom Filter vorhergesagter Meßgröße ein Maß für die Größe und Richtung der Peakverschiebung liefert.

Ein Aufsatz von H.N.J. Poulisse und P. Engelen "The Kalman Filters as an On-line Drift Compensator in Multicomponent Analysis Determinations" in "Analytical Letters" 13(A14) (1980), 1211-1234 beschreibt die Kompensation einer Grundliniendrift bei Analysengeräten mittels eines Kalman-Filters. Dabei werden in dem Zustandsvektor, der im wesentlichen von den Konzentrationen gebildet wird, zwei zusätzliche Elemente vorgesehen, von denen eines ein mit der Laufzahl multiplizierter Faktor und das andere eine Konstante ist. Diese beiden Größen stellen Driftparameter dar, die von dem Kalman-Filter mitgeliefert werden.


## Offenbarung der Erfindung

Der Erfindung liegt die Aufgabe zugrunde, bei der optischen Emissions-Spektroskopie, insbesondere der ICP-AES und hier der optischen Emissionsspektroskopie (ICP-OES), die Nachweisgrenzen zu verringern.

Weiterhin soll eine Möglichkeit geschaffen werden, überlappende Linien zu trennen und Untergrundemission zu erfassen.

Erfindungsgemäß wird diese Aufgabe gelöst durch die Verfahrensschritte:

(a) Erzeugen einer optischen Emission mit einer bekannten Konzentration eines gesuchten Elements,

(b) Abtasten des dabei erhaltenen Emissionsspektrums mittels eines Spektralphotometers mit einer spektralen Spaltbreite in einem Wellenlängenbereich, der eine Spektrallinie des gesuchten Elements enthält,

(c) Erzeugung einer optischen Emission mit einer unbekannten Probe, welche das gesuchte Element enthält, wobei die Konzentration des gesuchten Elements in der unbekannten Probe zu bestimmen ist,

(d) Abtasten des dabei erhaltenen Emissionsspektrums mittels des Spektralphotometers mit der gleichen spektralen Spaltbreite und in dem gleichen Wellenlängenbereich, in welchem die Abtastung des Emissionsspektrums mit der bekannten Konzentration erfolgte,

(e) Verarbeitung des von dem Spektralphotometer wellenlängenabhängig gelieferten, das Spektrum wiedergebenden Signals mittels eines rekursiven Kalman-Filters zur Erzeugung eines Schätzwertes für die Konzentration des gesuchten Elementes.

Nach der Erfindung werden somit nicht, wie sonst bei der Atomemissions-Spektroskopie üblich, die einzelnen Spektrallinien durch jeweils einen Detektor eines Spektrometers erfaßt, sondern die Spektrallinien werden durch ein Spektralphotometer abgetastet. Diese Abtastung geschieht einmal für eine Lösung eines einzigen gesuchten Elements oder für mehrere Lösungen, die jeweils ein einziges Element in bekannter Konzentration enthalten, und für eine zu analysierende Probe. Diese Abtastung geschieht mit einer endlichen spektralen Spaltbreite. Damit kann natürlich nicht der genaue Intensitätsverlauf der sehr schmalen Spektrallinien bestimmt werden. Das schadet aber nichts, wenn die Abtastung bei dem "Modell" und bei der eigentlichen Probe mit der gleichen spektralen Spaltbreite erfolgt. Das so erhaltene "Modell" des Spektrums mit den Konzentrationen als Parametern dient zum Aufbau eines Kalman-Filters, welches aus dem mit der Probe erhaltenen Intensitätsverlauf mit an sich bekannter Technik die Konzentrationen bestimmt. Es hat sich gezeigt, daß durch eine solche Abtastung des Linienspektrums eine erhebliche Verringerung der Nachweisgrenze erreicht werden kann.

Das rekursive Kalman-Filter kann bei den Rekursionsschritten in Wellenlängenschritten nacheinander die Signale des Spektralphotometers erfassen, die Differenz (Innovation) des jeweils gemessenen Signals mit einem vorhergesagten Signal bilden, das sich aus dem im vorhergehenden Rekursionsschritt erhaltenen Schätzwert der Konzentration ergibt, und den Schätzwert der Konzentration mit dieser Differenz (Innovation) multipliziert mit einer Filterverstärkung zur Bildung eines neuen Schätzwertes für den nächsten Rekursionsschritt korrigieren.

Die Breite der bei der Atomemissions-Spektroskopie erhaltenen Spektrallinien liegt im Bereich von Picometern. Es ergibt sich daher das Problem, daß die Wellenlängenskalen bei der Abtastung der Spektrallinien der Standardlösung oder Standardlösungen und bei der Abtastung der Spektrallinien der Probe durch geringfügige Änderungen an dem Spektralphotometer gegeneinander verschieben können.

4

Das würde die Funktion des Kalman-Filters beeinträchtigen.

Diese Probleme können dadurch gelöst werden, daß die den Signalen bei der Abtastung des Emissionsspektrums der bekannten Konzentration zugeordneten Wellenlängenwerte und die den Signalen bei der Abtastung des Emissionsspektrums der Probe zugeordneten Wellenlängenwerte nach einem iterativen verfahren relativ zueinander variiert werden, bis die Innovation, also die Differenz von gemessener und vorhergesagter Intensität, als Funktion der Wellenlänge einen flachen Verlauf hat.

Es können Emissionsspektren einer Mehrzahl von gesuchten Elementen einzeln mit bekannten Konzentrationen erzeugt werden, die Emissionsspektren mittels des Spektralphotometers mit der besagten spektralen Spaltbreite abgetastet werden, aus den so erhaltenen, normierten Emissionsspektren mit den Konzentrationen als Parametern ein Modell des Emissionsspektrums der Probe gebildet werden. Dabei können, beispielsweise durch Instabilitäten des Spektralphotometers, Verschiebungen des Emissionsspektrums gegenüber den aus der Literatur bekannten Emissionsspektren eintreten. Auch dieses Problem lässt sich mit Hilfe des Kalman-Filters nach dem vorgenannten Iterationsvererfahren beheben, in dem die Wellenlängenwerte der Emissionsspektren des Modells und die Wellenlängenwerte der aus der Literatur bekannten Emissionsspektren in einem vorgegebenen Wellenlängenbereich so lange relativ zueinander variiert werden, bis die Innovation optimal ist, d.h. die Differenz der Intensitäten des Modells und des Literaturspektrums als Funktion der Wellenlänge einen flachen Verlauf hat. Das Kalman-Filter kann nach diesem Modell Schätzwerte für diese Konzentrationen bilden. Dabei können sich Spektrallinien gesuchter Elemente sich innerhalb des abgetasteten Wellenlängenbereichs überlappen.

Weiterhin ist es möglich, daß das dem Kalman-Filter zugrundeliegende Modell die Untergrundemission berücksichtigt.

Die Erfindung ist nachstehend an Ausführungsbeispielen unter Bezugnahme auf die zugehörigen Zeichnungen näher erläutert.

## Kurze Beschreibung der Zeichnungen

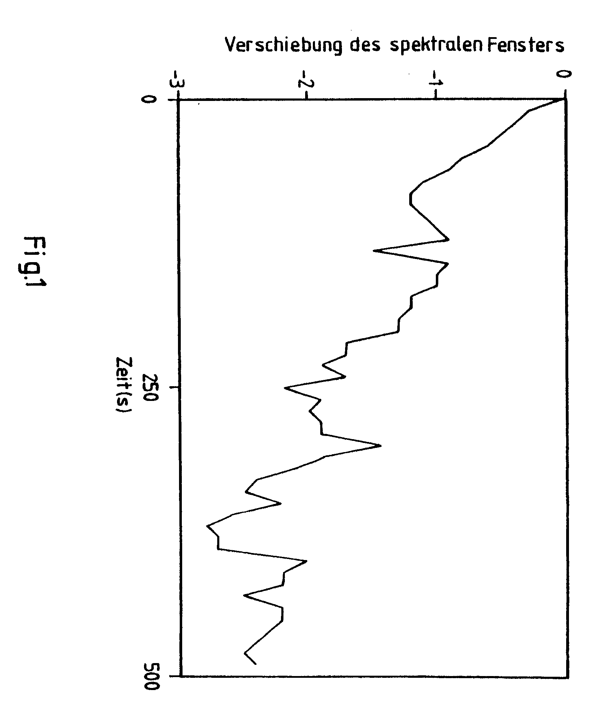

Fig.1 zeigt die Verschiebung des spektralen Fensters im Monochromator des Spektralphotometers als Funktion der Zeit.

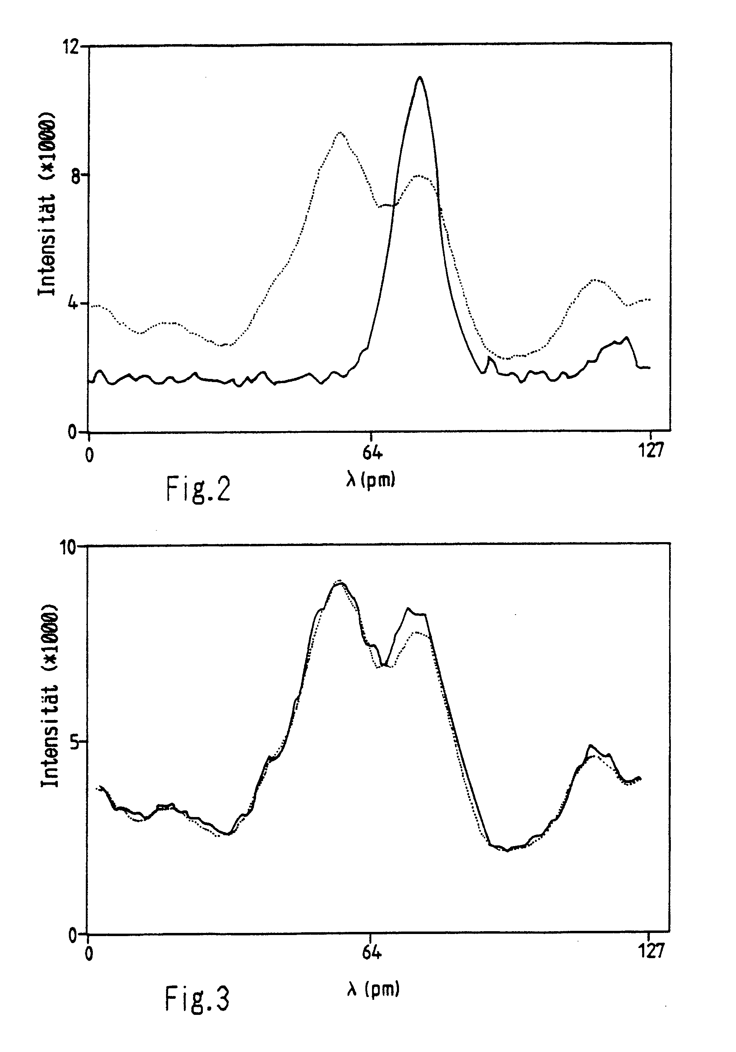

Fig.2 zeigt Abtastungen eines spektralen Fensters von 128 Picometer mit der Spektrallinie Nd II von 401,225 nm, und zwar einmal für eine Lösung von Neodym mit der Konzentration von 508 Mikrogramm pro Liter und zum anderen für eine Lösung von Praseodym mit einer Konzentration von 99,1 Milligramm pro Liter.

Fig.3 zeigt in einem spektralen Fenster von 128 Picometer mit der Spektrallinie Nd II von 401,225 nm das Proben- und Matrixspektrum einer Konzentration von 29,7 Mikrogramm pro Liter Neodym in einer Lösung mit einer Konzentration von 99,1 Milligramm pro Liter Praseodym, und zwar einmal die experimentell gewonnene Abtastung der Probe und zum anderen das Matrixspektrum, wie es aus der gefilterten Praseodym-Konzentration und dem Untergrund berechnet wurde.

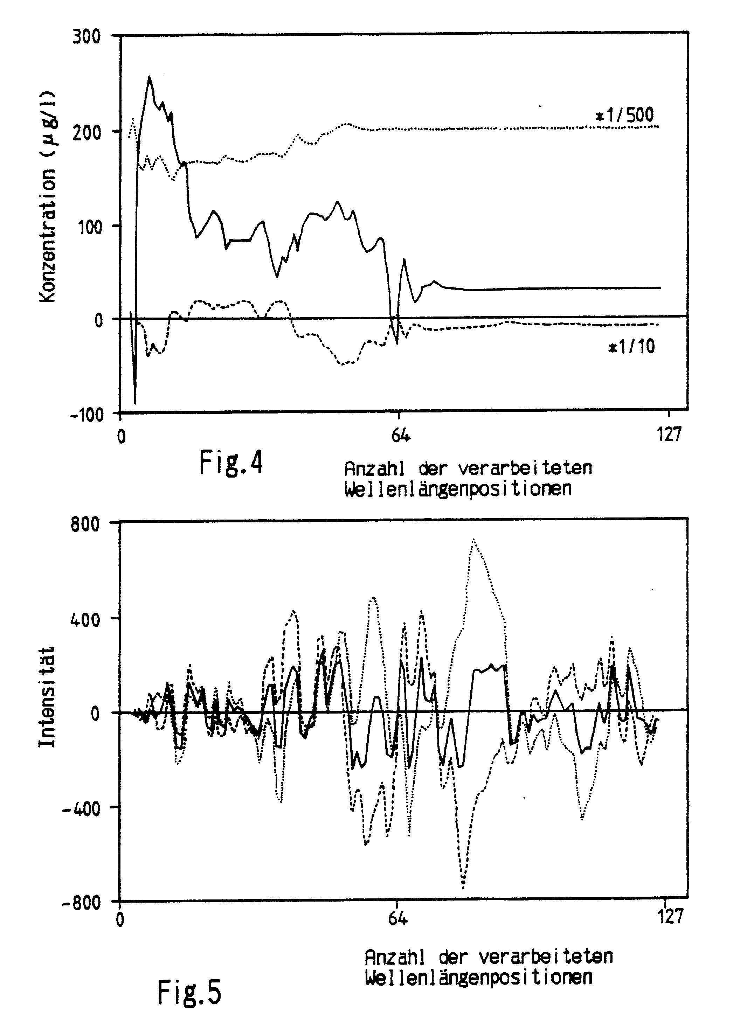

Fig.4 zeigt Schätzungen von Konzentration und Untergrund als Funktion der Wellenlängenpositionen, die in dem spektralen Fenster um die Spektrallinie Nd II von 401 ,225 nm verarbeitet wurden für eine Lösung mit einer Konzentration von 29,7 Mikrogramm pro Liter Neodym in einer Lösung von 99,1 Milligramm pro Liter Praseodym.

Fig.5 zeigt den Verlauf der "Innovation", also der Differenz von gemessener und vorherberechneter Intensität, in dem spektralen Fenster der Spektrallinie Nd II von 401,225 nm für eine Konzentration von 29,7 Mikrogramm pro Liter Neodym in einer Lösungvon 99,1 Milligramm pro Liter Praseodym, und zwar einmal für den Fall, daß die Wellenlängenskalen für Messung und Modell übereinstimmen, einmal für den Fall, daß die Wellenlängenskala der Messung um +1 pm (Picometer) gegenüber der Wellenlängenskala der Modelle verschoben ist, und schließlich einmal für den Fall, daß die Wellenlängenskala der Messung um -1 pm gegenüber den Modellen verschoben ist.

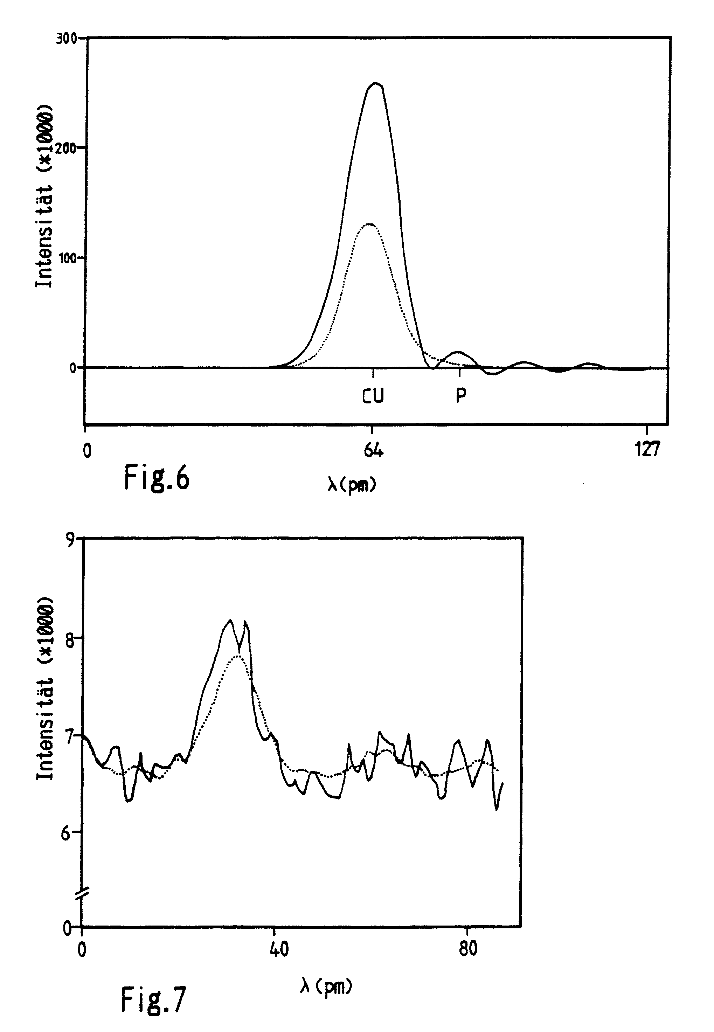

Fig.6 veranschaulicht die Wirkung einer Fourier-Entfaltung in einem spektralen Fenster mit der Spektrallinie P I von 213,618 nm, und zwar ist einmal die experimentelle Abtastung des Emissionsspektrums von 1,03 Milligramm pro Liter Phosphor in einer Lösung von 19,8 Milligramm pro Liter Kupfer und zum anderen das entfaltete Spektrum dargestellt.

Fig.7 zeigt ein Proben- und Matrixspektrum in einem 88 Picometer breiten spektralen Fenster mit der Spektrallinie Cd II 226,502, und zwar einmal die experimentelle Abtastung des Emissionsspektrums einer Probe mit 18,9 Mikrogramm pro Liter Cadmium in einer Lösung mit 607 Milligramm pro Liter Eisen und zum anderen ein Matrixspektrum wie es aus der gefilterten Eisenkonzentration und dem Untergrund berechnet wurde.

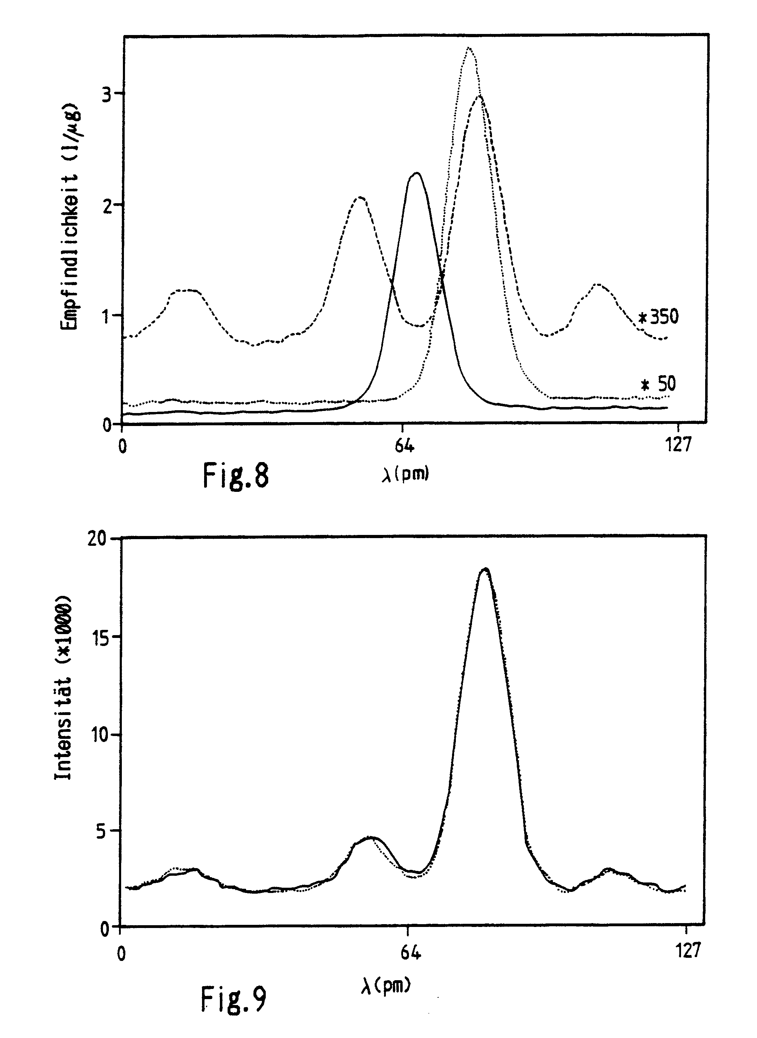

Fig.8 zeigt experimentelle Modelle in einem 128 pm breiten spektralen Fenster mit der Spektrallinie In I von 325,607 nm, nämlich für Indium, Molybdän und Wolfram.

Fig.9 zeigt das Matrixspektrum, das aus den gefilterten Molybdän- und Wolframkonzentrationen und dem Untergrund berechnet wurden.

## Bevorzugte Ausführung der Erfindung

Das Kalman-Filter bewirkt eine rekursive, digitale Signalverarbeitung, welche es gestattet, Konzentrationen von Elementen in Proben aus verrauschten Messungen von Emissions-Spektrallinien zu schätzen. Es soll eine Abtastung eine spektralen Fensters betrachtet werden, das überlappende Spektrallinien enthält. Dabei erfolgt die Abtastung in Wel lenlängenschritten von einer Wellenlängenposition $\lambda_1$ bis zu einer Wellenlängenposition $\lambda_n$. Die Wellenlänge $\lambda_k$ ist die unabhängige Variable.

Das betrachtete System wird durch zwei Gleichungen modelliert. Die erste Gleichung beschreibt die Wellenlängenabhängigkeit des Systems und enthält in einem Zustandsvektor die Größen, die gefiltert oder geschätzt werden sollen. Im vorliegenden Falle der Konzentrationsbestimmung ist der Zustandsvektor $C(\lambda_k)$ ein Vektor, dessen Komponenten die Konzentrationen der gesuchten Elemente in der Probe sind. Da diese Konzentrationen konstant und nicht wellenlängenabhängig sind, wird die "Systemgleichung" des Kalman-Filters trivial:

(1)    $C(\lambda_k) = I\ C(\lambda_{k-1})$.

Darin ist $I$ die Identitätsmatrix. Die Meßgleichung wird

(2)    $x(\lambda_k) = S^T(\lambda_k)\ C(\lambda_k) + v(\lambda_k)$.

Darin ist $x(\lambda_k)$ das bei der Wellenlängenposition $\lambda_k$ erhaltene Signal des Spektralphotometers. "$S^T$" ist ein Spaltenvektor und $S^T$ ist der zugehörige transponierte Vektor, also ein Zeilenvektor. Der Vektor $S$ stellt eine Beziehung her zwischen den Komponenten des Zustandsvektors $C$, also den Konzentrationen der verschiedenen Elemente in der Probe und dem gemessenen Signal. Mit "$v$" ist das Meßrauschen bezeichnet.

Die Meßgleichung setzt, generell, die in dem Zustandsvektor zusammengefaßten Zustände in Beziehung zu den gemessenen "Meßgrößen". Dies geschieht im vorliegenden Fall über den Vektor $S$. Die Vektoren $S(\lambda_k)$ für die verschiedenen Werte von k (k = 1...n) bilden eine Matrix $S$. Jeder Spaltenvektor $S(\lambda_k)$ stellt die Empfindlichkeit des Spektralphotometers für die verschiedenen Elemente bei der Wellenlängenposition k dar. Diese Spaltenvektoren $S$ werden experimentell bestimmt. Für die betreffenden Elemente werden die Spektren innerhalb des spektralen Fensters getrennt abgetastet. Die für die verschiedenen Wellenlängenpositionen k erhaltenen Signale werden durch die bekannte Konzentration dividiert, in welcher das Element für diese Abtastung vorlag. Praktisch läuft das auf die Herstellung von Eichkurven hinaus.

Die so erhaltenen Vektoren stellen "experimentelle Modelle" dar. Die Vektoren enthalten Rauschen, das nicht geglättet ist und mit in den Rauschterm v übernommen werden kann.

Weiterhin wird in der Matrix $S$ strukturierte Untergrundemission einschließlich de durch das Lösungsmittel hervorgerufenen Untergrundemission modelliert. Es können in dem Kalman-Filter auch andere Arten von Untergrundemission berücksichtigt werden. Es wird hierzu angenommen, daß diese Untergrundemission über das spektrale Fenster hinweg höchstens parabolischen Verlauf zeigt. Somit wird die Matrix $S$ durch drei Spaltenvektoren ergänzt, welche Elemente proportional "1", bzw. "$\lambda_k$" bzw. "$\lambda_k^2$" enthalten. Wenn sich im Verlauf der Signalverarbeitung herausstellt, daß die gefilterten Koeffizienten der linearen und quadratischen Terme sehr klein sind, was häufig der Fall ist, dann wird nur noch der erste dieser Spaltenvektoren beibehalten.

Es ist somit nicht erforderlich, vor der Signalverarbeitung durch das Kalman-Filter eine Untergrundkompensation vorzunehmen.

Aus den allgemeinen Algorithmen gemäß Gleichungen (1) und (2) ergibt sich als Extrapolation der Zustandsschätzung:

(3)    $C(\lambda_k;\lambda_{k-1}) = C(\lambda_{k-1};\lambda_{k-1})$

und als Extrapolation der Fehlercovarianz:

(4) $P(\lambda_k;\lambda_{k-1}) = P(\lambda_{k-1};\lambda_{k-1})$.

Der Kalman-Verstärkungsvektor, also der Vektor der Faktoren, mit denen die Differenz von Meßgröße und vorhergesagter Meßgröße zur Bildung eines Korrekturterms für die Komponente des Zustandsvektors multipliziert wird, ergibt sich zu

(5)$K(\lambda_k) = P(\lambda_k;\lambda_{k-1})S(\lambda_k)(S^T(\lambda_k)P(\lambda_k;\lambda_{k-1})S(\lambda_k) + S_x^2)^{-1}$.

Damit wird die Rekursionsformel, durch welche aus dem Schätzwert des (k-1)-ten Rekursionsschrittes ein vorhergesagter Schätzwert für den k-ten Rekursionsschritt gebildet wird:

(6) $C(\lambda_k;\lambda_k) = C(\lambda_k;\lambda_{k-1}) + K(\lambda_k)(x(\lambda_k) - S^T(\lambda_k)\ C(\lambda_k;\lambda_{k-1}))$.

6

Die Rekursionsformel für die Fehlercovarianz wird:

(7)     $P(\lambda_k;\lambda_k) = (I - K(\lambda_k)S^T(\lambda_k)) \, P(\lambda_k;(\lambda_k;\lambda_{k-1})$.

Gleichungen (3) und (4) werden vor der Messung in der Wellenlängenposition $\lambda_k$ gerechnet und liefern den optimalen a priori Schätzwert $C$ und dessen Fehlercovarianz-Matrix $P$. Dann erfolgt eine Messung in der Wellenlängenposition $\lambda_k$. Anhand der Gleichungen (5) bis (7) werden optimale a posteriori Schätzwerte gewonnen.

Hierbei wird die neue Information aus der Messung x zur Bildung eines Korrekturwertes benutzt, der zu dem a priori Schätzwert addiert wird. Der inverse Term in dem KalmanVerstärkungsvektor $K$ ist ein Skalar. Es ist also keine Inversion einem Matrix erforderlich sondern nur eine Division durch ein Skalar.

Da das Filter rekursiv arbeitet, müssen Anfangswerte für $C(\lambda_0;\lambda_0)$ und $P(\lambda_0;\lambda_0)$ geschätzt werden. Zu diesem Zweck werden die Konzentrationen und die Covarianzen außerhalb der Diagonale als null angenommen. Die diagonalen Covarianzen werden auf einen Wert gesetzt, der größer ist als die Varianz $S_x^2$ bei der Messung. Es hat sich eine Anfangscovarianz von mehr als 100 $S_x^2$ als zweckmäßig erwiesen. Die Schätzwerte werden nur von dem Verhältnis, nicht den Absolutwerten der Varianzen und Covarianzen beeinflußt. Es wird daher $P(\lambda_0;\lambda_0) = 10\,000\,S_x^2$ und $S_x^2 = 1$ angenommen. Es ergeben sich dann die Gleichungen für die Anfangsbedingungen:

(8)     $S_x^2(\lambda_k) = 1$

(9)     $C(\lambda_0;\lambda_0) = 0$

und

(10)     $P(\lambda_0;\lambda_0) = 10\,000\,I$.

Die Gleichungen (8) bis (10) stellen sicher, daß die Schätzwerte der Konzentrationen nicht von den geschätzten Anfangswerten abhängen.

Die Form und die Intensität der Signale des Spektralphotometers bei der Abtastung des Spektrums bleiben über eine ausreichende Zeitspanne hinweg stabil. Um jedoch unverfälschte Schätzwerte für die Konzentrationen zu erhalten, ist jedoch bei der Mehrkomponentenanalyse ein wesentliches Erfordernis zu erfüllen: Die Wellenlängenteilungen bei der Abtastung der Spektren für die experimentellen Modelle und bei der Abtastung des Spektrums der Probe für die Messung sollten zusammenfallen. Die Verschiebungen der Wellenlängenteilungen sollten höchstens in der Größenordnung von 0,1 Picometer liegen. Abtastende Spektralphotometer erfüllen diese Bedingungen nicht. Es kann bei solchen Spektralphotometern nicht eine am Monochromator eingestellte Wellenlänge über längere Zeit auf Picometer genau eingehalten werden. Die Wellenlängeneinstellung von Monochromatoren hängt von der Stellung mechanischer Bauteile ab. Diese werden durch äußere Einflüsse, beispielsweise die Umgebungstemperatur, beeinflußt.

Fig.1 zeigt ein Beispiel der Verschiebung des spektralen Fensters als Funktion der Zeit bei einem für Messungen der vorliegenden Art verwendeten Monochromator.

Dieses Problem kann jedoch mit dem Kalman-Filter gelöst werden. Zunächst werden die experimentellen Modelle gemessen. Daraus wird die Wellenlängenposition der Peakmaxima in dem spektralen Fenster berechnet. Die Wellenlängenskalen der einzelnen Modelle werden dann so relativ zueinander verschoben, daß sich die aus der Literatur bekannten relativen Peakpositionen ergeben. Wenn Peakpositionen nicht oder nicht mit der erforderlichen Genauigkeit bekannt sind, müssen sie im weiteren Fortgang des Verfahrens bestimmt werden.

Es erfolgt nun eine Filterung der mit der Probe erhaltenen Meßwerte mittels des Kalman-Filters. Es ist dabei keineswegs klar, welchen Wellenlängenpositionen die Meßdaten zuzuordnen sind. Die Spitze in dem Spektrum liegt irgendwo zwischen den Spitzen der Emissions-Spektrallinien der Bestandteile. Bei der Filterung wird jedoch der Verlauf oder die Folge der "Innovation" berechnet. Die Innovation ist die Differenz zwischen dem tatsächlichen Meßwert und dem vorhergesagten Schätzwert, wie er sich aus dem Schätzwert des Zustandsvektors und der Meßmatrix ergibt. Die "Innovation" ist gegeben durch (11)     $in(\lambda_k) = x(\lambda_k) - S^T(\lambda_k)\,C(\lambda_k;\lambda_{k-1})$

Wenn die Wellenlängenteilungen der Spektren des Modells und der Probe sich unterscheiden, treten in dem Verlauf bzw. der Folge der Innovation ausgeprägte Strukturen auf. Wenn die Wellenlängenteilungen zusammenfallen, ist die Innovation als Funktion der Wellenlänge eine Konstante. Sie zeigt lediglich weißes Rauschen. Daher ist der Verlauf der Innovation ein Kriterium, welches das Problem der optischen Instabilität des Monochromators zu lösen gestattet.

Der Verlauf oder die Folge von Innovationen bestimmen eine charakteristische Innovationszahl $N_{in}$, die durch Summierungnach Gleichung (11a) ermittelt wird

$$(11a) \quad N_{in} = \frac{1}{n} \sum_{k=1}^{n} in\,(\lambda_k)^2$$

Diese charakteristische Innovationszahl $N_{in}$ nimmt einen Minalwert an, wenn das vorgenannte Kriterium erfüllt ist, d.h. die Wellenlängenteilungen der Spektren des Modells und der Probe zusammenfallen und die "Innovation" als Funktion der Wellenlänge eine Konstante ist. Das Minimum der Innovationszahl $N_{in}$ wird zweckmässig nach einem iterativen Verfahren von aufeinanderfolgenden Intervallhalbierungen aufgesucht. Dabei werden die Messwerte durch Interpolation relativ zu den Modellvektoren verschoben und unter Anwendung des Kalman-Filters für jede Verschiebung die zugehörige Innovationszahl $N_{in}$ berechnet. Im einzelnen wird eine Verschiebung mit der kleinsten Innovationszahl und ihre nächsten Nacharn Nin ausgewählt und unter Halbierung der Intervalle eine erneute Bestimmung der kleinsten Innovationszahl $N_{in}$ vorgenommen. Dieses Iterationsverfahren wird fortgesetzt, bis die Halbierung der Intervalle zu Werten unter o,1 Picometer führt.

Diese Art der Signalverarbeitung verzichtet auf die Verarbeitung der Daten in Echtzeit. Die Iteration erfordert aber wenig Zeit. Die Gleichungen (5) und (7) werden für eine vorgegebene Matrix **S** nur einmal vor der Iteration berechnet. Darüber hinaus sind nur wenige Schritte erforderlich. Die Größe und Richtung der Drift sind fast bekannt. Das Verhalten des Monochromators (Fig.1) ist ziemlich konstant während eines Tages und von einem Tag auf den anderen.

Wenn in dem Verlauf der Innovation noch eine gewisse Struktur verbleibt, dann kann eine relative Wellenlängenposition in dem Modell falsch sein. Diese Wellenlängenposition kann in der oben beschriebenen Weise durch iterative Suche nach einem flachen Verlauf der Innovation optimiert werden. Andere Gründe für eine Struktur im Verlauf der Innovation können im Weglassen des Spektrums eines vorhandenen Elements in dem Modell liegen. Wenn umgekehrt ein Spektrum eines nicht vorhandenen Elements in dem Modell berücksichtigt ist, ergibt dies lediglich eine Konzentration null.

Das beschriebene Kalman-Filter kann auch strukturierte wie nicht-strukturierte Untergrundemission berücksichtigen.

Das Verhalten des Kalman-Filters wird u.a. auch durch die Nachweisgrenze charakterisiert. Im Falle einer dynamischen Messung kann die Nachweisgrenze bei Auftreten von Linienüberlappung angenähert werden durch

$$(12) \quad c_{L,true} = \frac{2x_I}{5 S_A} + \frac{3\sqrt{2}\, s\, d_{BI}}{S_A}$$

wobei $x_I$ das Netto-Störsignal bei der Wellenlänge der Spektrallinie des gesuchten Elements, $S_A$ die Empfindlichkeit des Signals des gesuchten Elements (Analyten) und $sd_{BI}$ die Standardabweichung des Leersignals (Untergrundemission und Störsignal) ist. Diese drei Größen können einfach gemessen werden. Gleichung (12) liefert dann eine Schätzung des ungünstigsten Falles. (Boumans und Vrakking in "Spectrochimica Acta 42B, 819 (1987)). Der erste Term der Gleichung (12) wird als "Selektivitätsterm" bezeichnet und gibt u.a. die Instabilität des Monochromators und die Effekte von Schwankungen in der Zusammensetzung der Probe wieder. Dieser Anteil ist es, der die Nachweisgrenze erheblich anhebt und entweder durch Verwendung von Spektometern hoher Auflösung oder durch geeignete Signalverarbeitung eliminiert werden muß.

Basierend auf statischen Messungen ist die konventionelle Nachweisgrenze $c_{L,conv}$ definiert, die dem zweiten Term von Gleichung (12) entspricht. Da die Untergrundemission durch Matrixlösung größer ist als das entsprechende Signal in wässriger Lösung, und da die relative Standardabweichung ziemlich konstant ist, sind $sd_{BI}$ und damit $c_{L,conv}$ etwas größer als die entsprechenden Werte in Wasser, die mit $sd_B$ und $c_{L,aq}$ bezeichnet sind. Die letztere Nachweisgrenze ist als Referenz als Schätzung des günstigsten Falles angegeben.

Die oben angegebenen Nachweisgrenzen sind äquivalent der Konzentration, die mit einer relativen Standardabweichung $rsd_A$ von 50% bestimmt werden kann. Bei Konzentrationen des Analyten in der Nähe der Nachweisgrenze ist $sd_A$ konstant und zweimal $sd_A$ ist gleich der Nachweisgrenze. Da der Ausgang des Kalman-Filters eine Konzentration ist, wird hier $sd_A$ aus mehrfachen Messungen bei diesen geringen Konzentrationen gefolgt von einer Filterung bestimmt. Die dabei erhaltene Zahl $c_{L,Kalman}$ kennzeichnet die gesamte Signalverarbeitung mit Kalman-Filter.

Experimentell ergab sich folgendes:

Die Messungen wurden durchgeführt mit einem Perkin-Elmer Plasma II-System, das mit einem Einmeter-Ebert-Monochromator ausgerüstet ist. Der Monochromator hat mittlere Auflösung. Der Monochromator weist ein holographisches Gitter mit 1800 Linien pro Millimeter, was zu einer reziproken linearen Dispersion von 0,527 nm/mm führt. Die praktische Auflösung wurde zu etwa 17 pm gemessen. Monochromatoren für ICP-AES - Systeme haben üblicherweise eine Auflösung von 15 bis 20 pm. Bei einem solchen System besteht eine vernünftige Wahrscheinlichkeit, daß Emissions-Spektrallinien durch spektrale Störungen nachteilig beeinflußt werden und somit der Selektivitätsterm überwiegt. Weiterhin sind die beobachteten Störungen Beispiele des ungünstigsten Falles. Viele Probleme bei der Behandlung dieser Störungen können gleichzeitig auftreten. Biese Probleme können beispielsweise sein: geringe Linientrennung, etwa eine Größenordnung kleiner als die praktische Auflösung, gleiche Formen der Spektrallinien infolge überwiegenden Beitrags der Gerätefunktion auf das gesamte Linienprofil oder geringe Intensität der Spektrallinie des Analyten gegenüber den Störintensitäten.

Das spektrale Fenster wurde bei den meisten Experimenten auf 128 pm eingestellt, wobei die Überlappung im Zentrum des spektralen Fensters stattfand. Die Schrittgröße betrug etwa 1,5 pm. Die Integrationszeit wurde auf 0,1 Sekunde pro Schritt eingestellt. Somit erfordert eine Abtastung etwa 8,5 Sekunden.

Die experimentellen Modelle können auf verschiedene Weise bestimmt werden. Bei einer Reihe zu analysierender Proben ist der Analyt bis zu einem bestimmten Niveau der Konzentration vorhanden. Es wird eine Lösung von reinem Analyten auf diesem Niveau hergestellt. Diese Lösung wird zehn Mal durch Abtasten des Spektrums gemessen. Die Positionen des Peakmaximums bei den zehn Abtastungen werden durch eine Peaksuchprozedur bestimmt. Die gemessenen Spektren werden dann relativ zu einer Wellenlängenteilung so verschoben, daß die Peakmaxima zusammenfallen. Dann wird in jedem Punkt des abgetasteten Spektrums die mittlere Intensität oder Empfindlichkeit berechnet zusammen mit der Standardabweichung der Empfindlichkeit im Peakmaximum.

Eine Abtastung des Spektrums der reinen Störelemente ist ausreichend, da die Form und nicht die Intensität der Emissions-Spektrallinie von Bedeutung ist. Bei der Signalverarbeitung mit dem Kalman-Filter beeinflußt eine ungenaue Intensität eines Elements des Modells nur den Schätzwert der Konzentration dieses einen Elements. Wenn aber, vorzugsweise, die Modelle der Störelemente in der gleichen Weise bestimmt werden, wie es oben für den Analyten beschrieben ist, dann führt das Kalman-Filter gleichzeitig eine Mehrelementen-Analyse durch.

Als Beispiele des beschriebenen Verfahrens wurden fünf Proben untersucht: Neodym (Nd) in Praseodym (Pr) , Phosphor (P) in Kupfer (Cu) , Cadmium (Cd) in Eisen (Fe) , Indium (In) in Molybdän (Mo) und Wolfram (W), und Mangan (Mn). Es soll die Signalverarbeitung mittels Kalman-Filter an dem Beispiel von Neodym in einer Matrix von Praseodym vollständig beschrieben werden.

Alle sechs hervorstechenden Spektrallinien von Neodym leiden an starken Störungen durch die Emissions-Spektrallinien von Praseodym bei einem Niveau der Konzentration von 100 Milligramm pro Liter. Die Nd II - Spektrallinie von 401,225 nm ist die am stärksten hervortretende Spektrallinie in wässriger Lösung. Fig.2 zeigt abgetastete Spektren für wässrige Lösungen von 508 Mikrogramm pro Liter Neodym und 99,1 Milligramm pro Liter Praseodym in dem spektralen Fenster der Spektrallinie Nd II von 401,225 nm. Die Neodym-Spektrallinie ist gestört durch eine Praseodym-Spektrallinie etwa 2 Picometer (pm) rechts und eine Praseodym-Spektrallinie etwa 17 pm links von der Emissions-Spektrallinie von Neodym. Da die relativen Peakpositionen aus der Literatur nicht genau bekannt sind, wurde der Abstand für die stärksten Spektrallinien bei beiden Abtastungen des Spektrums durch Signalverarbeitung mit dem Kalman-Filter zu 17,4 pm bestimmt. Aus den Daten, die durch die Abtastungen des Spektrums gewonnen wurden, wurden "wahre", "conventionelle" und "wässrlge" Nachweisgrenzen bestimmt, wie sie in Tabelle 1 angegeben sind.

Die experimentellen Modelle wurden aus Abtastungen des Spektrums ähnlich zuden in Fig.2 dargestellten, abgetasteten Spektren bestimmt. Dabei wurden die Intensitäten durch die entsprechenden Konzentrationswerte dividiert. Es wurden dann zehn aufeinanderfolgende Abtastungen der Spektren von jeder von fünf Proben durchgeführt und durch Signalverarbeitung mit einem Kalman-Filter gefiltert. Daraus ergaben sich Konzentrationen, die in Tabelle 2 aufgelistet sind. Tabelle 2 gibt auch die Standardabweichungen $sd_A$ an, die sich bei den gefilterten Konzentrationen ergaben. Aus den $sd_A$-Werten wurde die Nachweisgrenze $c_{L,Kalman}$ zu 9,7 Mikrogramm pro Liter berechnet.

Dieser Wert ist sehr günstig im Vergleich zu den anderen in der Tabelle 3 aufgelisteten Werten der Nachweisgrenze. Er ist fünfzehnmal niedriger als die "wahre" Nachweisgrenze. Darüber hinaus ist er sogar geringer als die "konventionelle" und die "wässrige" Nachweisgrenze. Das erklärt sich durch die Tatsache, daß infolge der Iteration basierend auf der Folge der "Innovationen" der Selektivitätsterm eliminiert worden ist und daß infolge der Filterung das Rauschen herausgemittelt wurde.

Zur Demonstration des Verhaltens des Kalman-Filters zeigt Fig.3 ein abgetastetes Spekrum von 29,7 Mikrogramm pro Liter Neodym in 99,1 Milligramm pro Liter Praseodym. Aus dieser kann Neodym mit einer Genauigkeit von 16% bestimmt werden. Praseodym wird mit einer Genauigkeit von 1,1% bestimmt. Dabei ist die Intensität der Spektrallinie von Neodym nur ungefähr ein Zehntel der Intensität der Spektrallinie von Praseodym. In Fig.4 sind die Schätzwerte für die Konzentrationen und die Untergrundemission, so wie sie rekursiv aus dem abgetasteten Spektrum von Fig.3 berechnet werden, als Funktion der Anzahl der verarbeiteten Wellenlängenpositionen dargestellt. Aus diesen Kurven wird klar, daß, sobald das Emissionssignal eines der Elemente auftritt (siehe Fig.2), die entsprechende Konzentration unmittelbar richtig geschätzt wird.

Der Einfluß verschobener Peakpositionen auf die Genauigkeit ist in Tabelle 3 veranschaulicht. Ausgehend von einer Situation, bei welcher sich das gemessene Spektrum und die Modelle in ihren richtigen Wellenlängenpositionen befinden, bezeichnet $\Delta\lambda$ die Verschiebung des gemessenen Spektrums gegenüber den Modellen. $\delta\lambda$ bezeichnet die Verschiebung zweier Modelle, also abgetasteter Emissions-Spektren der einzelnen Elemente, gegeneinander. Für eine Verschiebung $\Delta\lambda$ = +/- 1 pm ergibt sich eine Abweichung der Neodym-Konzentration von 50%. Fig.5 zeigt den entsprechenden Verlauf der Innovations-Folgen, nämlich der Verlauf für den Fall, daß das gemessene Spektrum der Probe sich in der richtigen Wellenlängenposition zu den Modellen befindet und für den Fall, daß das gemessene Spektrum um +1 pm bzw. -1 pm gegenüber den Modellen verschoben ist. Die dick ausgezogene Linie zeigt den Verlauf der Innovation, wenn das gemessene Spektrum der Probe und die Modelle in ihrer richtigen Wellenlängenposition sind. Die punktiert gezeichnete Linie zeigt den Verlauf der Innovation, wenn das gemessene Spektrum um +1 pm gegenüber den Modellen verschoben ist. Die gestrichelt gezeichnete Linie zeigt den Verlauf der Innovation, wenn das gemessene Spektrum um -1 pm gegenüber den Modellen verschoben ist. Man erkennt, daß die dick ausgezogene Linie im wesentlichen symmetrisch zu der Grundlinie ist. Die punktiert dargestellte Linie zeigt einen Überhang zur positiven Seite hin, während die gestrichelte Linie einen Überhang zur negativen Seite hin zeigt. Man erkennt, daß der Verlauf der "Innovation" ein Kriterium für die relative Verschiebung der Spektren liefert. Dieses Kriterium kann zur Eliminierung der durch die optische Instabilität des Monochromators hervorgerufenen Fehler benutzt werden.

Bei einer Verschiebung der Modelle um 1 pm aus ihrer richtigen Lage ($\Delta\lambda$ = +/-1 pm) ergibt sich nach Tabelle 3 eine Abweichung der Konzentration von Neodym von 3%. Diese Abweichung ist ziemlich klein. In dem Verlauf der Innovation zeigt jedoch immer noch einige Strukturen, was auf einen Fehler bei den Modellen hindeutet. Bei höheren Konzentrationen, z.B. 392 Mikrogramm pro Liter Neodym wird die Abweichung der Schätzwerte kleiner und beträgt 5% bei $\Delta\lambda$ = +/-1 pm und 1% bei $\delta\lambda$ = +/- 1 pm.

Die Nachweisgrenzen bei allen untersuchten Proben sind in Tabelle 1 zusammengestellt. Erwartungsgemäß ist die Ordnung der Nachweisgrenzen $c_{L,true}$ > $c_{L,conv}$ > $c_{L,aq}$. Das erstaunlichste Ergebnis ist jedoch, daß $c_{L,Kalman}$ wesentlich geringer ist als die konventionelle und die "wäßrige" Nachweisgrenze. Tabelle 2 zeigt einige Beispiele der Genauigkeit von analytischen Ergebnissen, die mittels des Kalma-Filters erreicht wurden. Es ergibt sich, daß das Kalman-Filter genaue Ergebnisse liefert. Bei hohen Matrix-Konzentrationen (Praseodym und Molybdän/Wolfram) tritt ein Matrix-Effekt auf. Tabelle 3 liefert eine Illustration der Abweichungen, die bei einigen Konzentrations-Schätzwerten auftreten, wenn es nicht gelingt, den Einfluß der Drift des spektralen Fensters zu eliminieren.

Es werden nachstehend einige Beispiele beschrieben, welche die Wirkung der Signalerzeugung- und Signalverarbeitung für die verschiedenen möglichen Situationen veranschaulichen.

Die Wirkung der Signalverarbeitung mittels des Kalman-Filters bei einander überlappenden Peaks mit großem Abstand soll anhand des Beispiels von Phosphor (P) in einer Matrix von Kupfer (Cu) erläutert werden.

Phosphor hat nur zwei herausragende Spektrallinien bei Wellenlängen von 213,618 nm und 214,914 nm. Diese Spektrallinien werden beide von Kupfersignalen gestört. Für die nächsten beiden Spektrallinien von Phosphor sind die Nachweisgrenzen vier bis fünf Mal höher. Dabei werden diese Spektrallinien auch von Kupfer gestört. So ist es schwierig, Phosphor in geringer Konzentration in kupferhaltigen Matrices zu bestimmen.

Es wurden Lösungen von 300 bis 1000 Mikrogramm pro Liter Phosphor in einer Matrix von 20 Milligramm pro Liter Kupfer in einem spektralen Fenster bei 213,618 nm untersucht.

Da das schwache Phosphorsignal am Rande des Kupfersignals liegt (Fig.6), das sehr stark ist, ist die Wellenlängenposition des gemessenen Spektrums zu der Wellenlängenposition des Modells entscheidend. Schon eine Verschiebung $\Delta\lambda$ von +/- 0,1 pm bewirkt eine Abweichung der erhaltenen Phosphorkonzentration von 30% (Tabelle 4). Wie erläutert wird eine solche Verschiebung der Wellenlängenpositionen duch das Kriterium des flachen Verlaufs der Innovation eliminiert. Auch die Wellenlängendifferenz der beiden Modellpeaks ist ziemlich kritisch. Bei einer Verschiebung von $\delta\lambda$ = +/- 1 pm kann die Abweichung der Schätzung der Phosphorkonzentration bis zu 10% betragen. Das erklärt die Forderung, daß die relativen Wellenlängenpositionen der Peakmaxima mindestens mit einer Genauigkeit von 0,1 pm bekannt sein müssen. Nach der Literatur beträgt der Abstand zwischen den Peakmaxima von Kupfer und Phosphor etwa 20 pm. Daher wird zur Trennung ein genauer Wert dringend beötigt. Eine Suche nach einem flachen Verlauf der Innovation ergibt einen Wert von 20,3 pm.

Bei dieser Linientrennung und einer praktischen Auflösung von 17 pm kann das Linienpaar einer Fourier-Entfaltung zur Berücksichtigung instrumenteller Verbreiterung unterworfen werden. Das Ergebnis dieser Fourier-Entfaltung ist in Fig.6 dargestellt. Bei der Entfaltung entstehen Seitenzipfel auch wenn bei der Messung eine Integrationszeit von einer Sekunde benutzt wird. Da die Amplitude der Seitenzipfel von dem Rauschen des abgetasteten Spektrums abhängt, ist es schwierig, die Intensität an der der Wellenlängenposition der Phosphorlinie zu bestimmen, und die Nachweisgrenze verschlechtert sich. Obwohl die Nachweisgrenze besser als die "wahre" Nachweisgrenze ist, liegt sie höher als $c_{L,Kalman}$. Die Nachweisgrenze mit dem Verfahren der Fourier-Entfaltung ist ungefähr 400 Mikrogramm pro Liter. Somit ist die Anwendung der Fourier-Entfaltung begrenzt durch das gemessene Spektrum und die Nachweisgrenze. Dieses Verfahren kann nur angewndt werden bei einem Linienabstand in der Größenordnung der Auflösung des Spektrometers. Die Fourier-Entfaltung ist unabhängig von der Probenzusammensetzung. Wenn aber die störenden Elemente bekannt sind, ist die Signalverarbeitung mit einem Kalman-Filter gegenüber der Fourier-Entfaltung vorzuziehen.

Ein zweites Beispiel ist die Analyse von Elementen mit sich überlappenden Spektrallinien bei kleinem Linienabstand.

Es wurde ein System untersucht, bei welchem der Peakabstand klein ist und die Konzentrationen gleichzeitig aus einem spektralen Merkmal bestimmt werden müssen. Das untersuchte System enthält die Spektrallinie Cd II von Cadmium bei 226,502 nm, gestört von einer Eisen-Spektrallinie bei 226,505 nm. Der Linienabstand zwischen diesen beiden Spektrallinien beträgt 3,3 pm. Bei einer spektralen Bandbreite des Spektralphotometers von 17 pm haben die beiden Spektrallinien übereinstimmende Form. Weiterhin ist bei einer Eisenlösung von 600 Milligramm pro Liter das in der Nähe der Nachweisgrenze liegende Cadmiumsignal um einen Faktor fünf kleiner als das Eisensignal, wie in Fig.7 dargestellt ist. Tabelle 2 zeigt, daß auch unter diesen ungünstigen Umständen $c_{L,Kalman}$ wesentlich geringer ist als die übrigen Nachweisgrenzen.

Im folgenden soll das Verhalten des Kalman-Filters in Gegenwart von mehr als einer Störkomponente untersucht werden. Hierfür wurde ein System mit Indium, Molybdän und Wofram benutzt.Tatsächlich wird dieses System mit einer konstanten Untergrundemission als Vierkomponentensystem behandelt. Fig.8 zeigt die abgetasteten Spektren, die als experimentelle Modelle dienen. Gegenüber der Emissions-Spektrallinie von Indium bei 325,609 nm zeigen Molybdän und Wolfram maximale Emissions-Intensitäten in dem spektralen Fenster bei relativen Wellenlängenpositionen von +12,0 pm bzw. +14,0 pm. Unter Verwendung des Kriteriums des flachen Verlaufs der Innovation ergaben sich die Wellenlängenpositionen zu +11,6 pm bzw. +13,3 pm. Die Indium-Konzentration wurde von 200 bis 800 Mikrogramm pro Liter variiert in einer Lösung, die 200 Milligramm pro Liter Molybdän und 800 Milligramm pro Liter Wolfram enthielt (Fig.9).

Die Anwendung des Kalman-Filters führte zu einer Nachweisgrenze, die achtmal niedriger ist als die "wahre" Nachweisgrenze $c_{L,true}$ (Tabelle 1). Wieder wurde nicht nur der Selektivitätsterm eliminiert sondern ist auch die Mittelung des Rauschens beträchtlich. Da der Selektivitätsterm keine Rolle mehr spielt, scheint die Auswahl der Spektrallinien fast unabhängig von der Zusammensetzung der Matrix zu werden.

Die beschriebene Signalverarbeitung durch ein Kalman-Filter ist auch vorteilhaft anwendbar für die Abtastung einzelner Spektrallinien. Das wird anhand der Spektrallinie Mn II von Mangan bei 257,610 nm verdeutlicht. Das experimentelle Modell wurde bestimmt bei einer Konzentration von 100 Mikrogramm pro Liter. Es wurden Spektren abgetastet von Mangan in Konzentrationen von 5 bis 40 Mikrogramm pro Liter. Tabelle 1 zeigt, daß das Kalman-Filter tatsächlich eine Mittelung des Rauschens mit einem Faktor von etwa zwei gestattet.

## Ansprüche

1. Verfahren zur Konzentrationsbestimmung mittels optischer Emissions-Spektroskopie, **gekennzeichnet durch die Verfahrensschritte:**

(a) Erzeugen einer optischen Emission mit einer bekannten Konzentration eines gesuchten Elements,

(b) Abtasten des dabei erhaltenen Emissionsspektrums mittels eines Spektralphotometers mit einer spektralen Spaltbreite in einem Wellenlängenbereich, der eine Spektrallinie des gesuchten Elements enthält,

(c) Erzeugung einer optischen Emission mit einer unbekannten Probe, welche das gesuchte Element enthält, wobei die Konzentration des gesuchten Elements in der unbekannten Probe zu bestimmen ist,

(d) Abtasten des dabei erhaltenen Emissionsspektrums mittels des Spektralphotometers mit der gleichen spektralen Spaltbreite und in dem gleichen Wellenlängenbereich, in welchem die Abtastung des Emissionsspektrums mit der bekannten Konzentration erfolgte,

(e) Verarbeitung des von dem Spektralphotometer wellenlängenabhängig gelieferten, das Spektrum wiedergebenden Signals mittels eines rekursiven Kalman- Filters zur Erzeugung eines Schätzwertes für die Konzentration des gesuchten Elementes.

2. Verfahren nach Anspruch 1, **dadurch gekennzeichnet, daß** das rekursive Kalman-Filter

(a) bei den Rekursionsschritten in Wellenlängenschritten nacheinander die Signale des Spektralphotometers erfaßt,

(b) die Differenz (Innovation) des jeweils gemessenen Signals mit einem vorhergesagten Signal bildet, das sich aus dem im vorhergehenden Rekursionsschritt erhaltenen Schätzwert der Konzentration ergibt, und

(c) den Schätzwert der Konzentration mit dieser Differenz (Innovation) multipliziert mit einer Filterverstärkung zur Bildung eines neuen Schätzwertes für den nächsten Rekursionsschritt korrigiert.

3. Verfahren nach Anspruch 2, **dadurch gekennzeichnet, daß** die den Signalen bei der Abtastung des Emissionsspektrums der bekannten Konzentration zugeordneten Wellenlängenwerte und die den Signalen bei der Abtastung des Emissionsspektrums der Probe zugeordneten Wellenlängenwerte relativ zueinander variiert werden, bis die Innovation wellenlängenunabhängig wird und eine iterativ ermittelte zugehörige Innovationszahl einen Minimalwert annimmt.

4. Verfahren nach einem der Ansprüche 1 bis 3, **dadurch gekennzeichnet, daß**

(a) Emissionsspektren einer Mehrzahl von Elementen einzeln mit bekannten Konzentrationen erzeugt werden,

(b) die Emissionsspektren mittels des Spektralphotometers mit der besagten spektralen Spaltbreite abgetastet und hinsichtlich der Konzentration normiert werden,

(c) aus den so erhaltenen, hinsichtlich der Konzentration normierten Emissionsspektren ein Modell des Emissionsspektrum der Probe gebildet wird,

(d) in dem Modell des Emissionsspektrums die relativen Wellenlängenpositionen der Modellvektoren bestimmt werden, indem aus der Literatur bekannte Emissionswellenlängenwerte der einzelnen Elemente und die gemessenen Emissionswellenlängenwerte relativ zueinander variiert werden bis die Innovation wellenlängenunabhängig wird und eine iterativ ermittelte, zugehörige Innovationszahl einen Minimalwert annimmt, und

(e) das Kalman-Filter nach diesem Modell Schätzwerte für diese Konzentration bildet.

5. Verfahren nach Anspruch 4, **dadurch gekennzeichnet, daß** Emissionslinien gesuchter Elemente sich innerhalb des abgetasteten Wellenlängenbereichs überlappen.

6. Verfahren nach einem der Ansprüche 1 bis 5, **dadurch gekennzeichnet, daß** das dem Kalman-Filter zugrundeliegende Modell eine Untergrundemission berücksichtigt.

Fig.1

Fig.2

Fig.3

14

Fig.4

Anzahl der verarbeiteten
Wellenlängenpositionen

Anzahl der verarbeiteten
Wellenlängenpositionen

Fig.5

Fig.6

Fig.7

Fig.8

Fig.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 3 720 977 (KERNFORSCHUNGSZENTRUM KARLSRUHE) * Gesamt * | 1,2 | G 01 N 21/31 G 01 N 21/62 |
| A | DE - A1 - 3 701 583 (BODENSEEWERK) * Zusammenfassung; Ansprüche; Seite 1, Zeilen 53-66; Seite 3, Zeile 60 - Seite 4, Zeile 27; Seite 7, Zeilen 35 - Seite 8, Zeile 28; Fig. 1-3 * | 1,2 | |
| A | DE - A1 - 3 418 081 (TELDIX GMBH) * Zusammenfassung; Ansprüche; Seite 6, Zeile 11 - Seite 7, Zeile 19; Seite 32, Zeile 1 - Seite 35, Zeile 10; Fig. 1 * | 1,2 | |
| A | DE - A1 - 3 131 111 (BODENSEEWERK) * Zusammenfassung; Ansprüche; Seite 20, Zeilen 11-26; Fig. 1-4 * | 1,2 | RECHERCHIERTE SACHGEBIETE (Int Cl⁵) G 01 C 19/00 G 01 C 21/00 G 01 N 21/00 G 01 N 27/00 |
| D,A | JOURNAL OF CHEMOMETRICS, Band 3, 1988, John Wiley & Sons LTD., GAIL HARTMANN WEBSTER et al. "Characterization of the effect of peak shifts on the performance of the Kalman Filter in multicomponent analysis" Seiten 21-32 * Seiten 21-32 * | 1 | |
| D,A | SPECTROCHIMICA ACTA, Teil B: Atomic Spectroscopy; Band | 1 | |

Der vorliegende Recherchenbericht wurde für alle Patentansprüche erstellt.

| Recherchenort WIEN | Abschlußdatum der Recherche 17-12-1990 | Prüfer ERBER |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| | 42B, Nr. 6, 1987, Pergamon Press; Oxford, New York P.W.J.M. BOUMANS et al. "Detection limit including selectivity as a criterion for line selection in trace analysis using inductively coupled plasmaatomic emission spectrometry (ICP-AES) - a tutorial treatment of a fundamental problem of AES" Seiten 819-840 -- | | |
| D,A | ANALYTICA CHIMICA ACTA, Band 181, 31. März 1986, Elsevier Science Publishers B.V. S.D.BROWN "The Kalman Filter in Analytical Chemistry" Seiten 1-26 * -- | 1 | |
| D,A | ANALYTICAL CHEMISTRY, Band 53, 1981, American Chemical Society T.F. BROWN et al. "Resolution of overlapped Electrochemical Peaks with the Use of the Kalman Filter" Seiten 1410-1417 -- | 1 | RECHERCHIERTE SACHGEBIETE (Int. Cl.⁵) |
| D,A | ANALYTICAL LETTERS, Teil B -CLINICAL AND BIOCHEMICAL ANALYSIS, Band 13(A14), Nr. B10, 1980 H.N.J. POULISSE et al. "The Kalman Filters as an On-line Drift Compensator in Multi-component Analysis Deter-minations" Seiten 1211-1234 | 1 | |

Der vorliegende Recherchenbericht wurde für alle Patentansprüche erstellt.

| Recherchenort | Abschlußdatum der Recherche | Prüfer |
|---|---|---|
| WIEN | 17-12-1990 | ERBER |